(19) Europäisches Patentamt
European Patent Office
Office européen des brevets

(11) **EP 0 840 137 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(51) Int Cl.⁷: **G01S 5/14**

(21) Anmeldenummer: **97118790.1**

(22) Anmeldetag: **29.10.1997**

(54) **Satelliten-Navigationsverfahren**

Method of satellite navigation

Procédé de navigation par satellite

(84) Benannte Vertragsstaaten:
**CH DE ES FR GB IT LI SE**

(30) Priorität: **05.11.1996 DE 19645528**

(43) Veröffentlichungstag der Anmeldung:
**06.05.1998 Patentblatt 1998/19**

(73) Patentinhaber: **DaimlerChrysler Rail Systems GmbH**
**13627 Berlin (DE)**

(72) Erfinder: **Gu, Xiaogang, Dr.**
**89155 Erbach (DE)**

(74) Vertreter: **Thielmann, Andreas et al**
**Cohausz & Florack**
**Patentanwälte**
**Postfach 33 02 29**
**40435 Düsseldorf (DE)**

(56) Entgegenhaltungen:
**EP-A- 0 574 009        US-A- 5 364 093**
**US-A- 5 490 079**

## Beschreibung

Die Erfindung geht aus von einem Satelliten-Navigationsverfahren nach dem Patentanspruch 1.

Die Erfindung betrifft insbesondere ein Satelliten-Navigationsverfahren für eine terrestrische (erdgebundene) Mobilstation, das heißt eine auf der Erdoberfläche (Festland und/oder Wasser) bewegliche Station, die zumindest eine Empfangs- und Auswerteeinrichtung enthält zum Empfang und zur Auswertung der verfügbaren Satellitsignale der Navigations-Satelliten, beispielsweise entsprechend dem amerikanischen GPS-System und/oder dem russischen GLONASS-System. Bei dem GPS-System ist für zivile Anwendungen bei der geographischen Positionsbestimmung einer Mobilstation bei einer unmittelbaren Auswertung der Satellitensignale eine Genauigkeit von $\pm$ 100 m (95%) er- reichbar. Ist eine genauere Positionsbestimmung erforderlich, so wird im allgemeinen ein differentielles Navigationsverfahren angewandt, beispielsweise das sogenannte DGPS ("Differential Global Positioning System").

Dabei werden ortsfeste Referenzstationen, sogenannte DGNSS-Referenzstationen, mit jeweils bekannter geographischer Position verwendet. In einer solchen Referenzstation sind die geometrischen Entfernungen von der (Satelliten-)Empfangsantenne, zu allen empfangbaren ("sichtbaren") Navigations-Satelliten zu jeder Zeit bekannt. Werden nun an der Antenne die eingangs erwähnten Satelliten-Signale empfangen, so ergeben sich aus den Signallaufzeiten sogenannte Pseudo-Entfernungen zu den empfangbaren Satelliten. Aus dem Vergleich der Pseudo-Entfernungen mit den bekannten geometrischen Entfernungen werden standardisierte Korrekturwerte ermittelt. Diese werden von der Referenzstation zeitlich fortlaufend oder zeitlich periodisch ausgesandt über bekannte Datenverbindungen (Funkkanäle). In einer Mobilstation können nun diese Korrekturwerte empfangen werden und damit die von der Mobilstation ermittelten Pseudo-Entfernungen korrigiert werden. Mit einem solchen differentiellen Satelliten-Navigationsverfahren ist für die Mobilstation bei deren Positionsbestimmung eine Genauigkeit im Bereich einiger Meter, oder sogar weniger, erreichbar. Ein solches Verfahren ist bekannt aus EP 0 574 009 mit Merkmalen des Oberbegriffs von Anspruch 1.

Ein solches standardisiertes differentielles Navigationsverfahrens ist jedoch in nachteiliger Weise technisch aufwendig für eine terrestrische Landanwendung (Navigation auf der Landoberfläche). Denn für eine zuverlässige Übertragung der Differential-Korrekturen (Korrekturwerte), insbesondere in hügeligem und/oder bergigem Gelände sind eine Vielzahl von (Relais-)Sendestationen erforderlich, um eine Mobilstation zu jeder Zeit mit Korrekturwerten zu versorgen ohne daß eine Abschattung der Datenverbindung (Funkkanal) von der DGNSS-Referenzstation zu der Mobilstation erfolgt.

Der Erfindung liegt die Aufgabe zugrunde, ein gattungsgemäßes Verfahren anzugeben, mit dem in kostengünstiger und zuverlässiger Weise für eine Mobilstation mittels einer Satelliten-Navigation eine Positionsbestimmung ermöglicht wird mit einer Genauigkeit, welche derjenigen bei einem differentiellen Satelliten-Navgationsverfahren entspricht, ohne daß eine sogenannte DGNSS-Referenzstation benötigt wird.

Diese Aufgabe wird gelöst durch die in den kennzeichnenden Teilen der Patentansprüche 1 angegebenen Merkmale. Vorteilhafte Ausgestaltungen und/oder Weiterbildungen sind den weiteren Ansprüchen entnehmbar.

Ein Vorteil der Erfindung besteht darin, daß eine genaue Satelliten-Navigation nahezu überall möglich ist. Es wird keine Funkstrecke benötigt, die nachteiligerweise störanfällig und abschattbar ist.

Die Erfindung basiert auf einer Mobilstation mit einer (Satelliten-)Empfangs- und Auswerteeinrichtung, mit der lediglich eine eingangs erwähnte unmittelbare Satelliten-Navigation ermöglicht wird, das heißt, die Satellitensignale werden unmittelbar empfangen und ausgewertet. Es ist also an sich nur eine ungenaue Positionsbestimmung möglich. Solche Mobilstationen und/oder die dafür nötigen Baugruppen sind derzeit kostengünstig herstellbar und daher bei vielen Anwendungen eingesetzt, beispielsweise in Kraftfahrzeugen, Lokomotiven, Schiffen sowie in kleinen Stationen, die durch eine Person tragbar sind. Befindet sich eine solche Mobilstation nun bei einer Referenzmarke, deren geographische Position genau bekannt ist, so können für diese Referenzmarke die geometrischen (tatsächlichen) Entfernungen (mittels der Ephimeridendaten der Satelliten) zu allen empfangbaren Navigations-Satelliten ermittelt werden. Andererseits können mittels der Mobilstation durch Satelliten-Navigation die sogenannten Pseudo-Entfernungen am Ort der Referenzmarke, oder in deren Nähe, zu einem vorgebbaren Zeitpunkt, beispielsweise beim Überqueren (Passieren) der Referenzmarke, gemessen werden und daraus bedarfsweise deren (Satelliten-)Position ermittelt werden. Aus dem Vergleich der gemessenen Pseudo-Entfernungen mit den bekannten Entfernungen können in an sich bekannter Weise die bei der differentiellen Satelliten-Navigation üblichen Korrekturwerte bestimmt werden. Bewegt sich nun die Mobilstation von der Referenzmarke weg, so werden diese Korrekturwerte benutzt, um weitere Positionsbestimmungen entsprechend der differentiellen Satelliten-Navigation zu korrigieren. Gelangt die Mobilstation entlang ihres Weges nun auf eine weitere Referenzmarke oder in eine genau meßbare Position zu dieser, so werden die Korrekturwerte in der beschriebenen Weise erneut bestimmt.

Mit dem beschriebenen Verfahren ist also vorteilhafterweise eine Art differentielle Satelliten-Navigation möglich, ohne daß eine dabei ansonsten nötige DGNSS-Referenzstation sowie ein Funkkanal zur Übertragung der Differential-Korrekturwerte verwendet werden.

Bei einer sich bewegenden Mobilstation kann die beschriebene Satelliten-Navigation zwischen den Referenzmarken vorteilhafterweise außerdem korrigiert (interpoliert) werden mittels der ausreichend genau (der gewünschten Navigations-Genauigkeit angepaßt) gemessenen Geschwindigkeit der Mobilstation. Die Geschwindigkeit kann beispielsweise zeitlich fortlaufend durch einen Tachometer für den (Geschwindigkeits-)Betrag und einen Vergleich mit einer Streckenkarte (für die Fahrtrichtung) ermittelt werden.

Für die erwähnten Referenzmarken können vorteilhafterweise bereits vorhandene (Referenz-)Marken verwendet werden, welche an die Art der Mobilstation und/oder deren Verwendung angepaßt sind. Befindet sich eine solche Mobilstation beispielsweise in einer Lokomotive, so ist es zweckmäßig, als Referenzmarken alle Signaleinrichtungen zu verwenden, welche von der Lokomotive automatisch erkannt werden. Solche Signaleinrichtungen sind beispielsweise induktiv arbeitende Positionsmelder und/oder Zugbeeinflussungsanlagen, welche derzeit entlang und/oder zwischen den Gleisen angeordnet sind. Bei einem Kraftfahrzeug können als Referenzmarken beispielsweise die derzeit vorhandenen Induktionsschleifen zur Steuerung des Verkehrs, die innerhalb des Straßenbelages liegen, verwendet werden. Weiterhin ist es beispielsweise möglich, sogenannte geodätische Vermessungspunkte zu verwenden, die beispielsweise mittels eines optisch arbeitenden Lesegerätes von der Mobilstation erkannt werden. Bei einem Schifffahrtsweg, beispielsweise einem Fluß oder einem Kanal, können beispielsweise dort vorhandene Seezeichen (Bojen, Tonnen) als Referenzmarken verwendet werden.

Es ist also lediglich erforderlich, zu allen genutzten Referenzmarken, beispielsweise entlang eines Verkehrsweges, die zugehörigen geographischen Positionen einmalig zu ermitteln und diese dann derart zu speichern, daß sie bedarfsweise von einer Mobilstation verwendet werden können. Eine solche Speicherung kann beispielsweise in einem in der Auswerteeinheit vorhandenen Datenspeicher erfolgen und/oder in einem bei der Referenzmarke in einem Sendegerät angeordnetem Datenspeicher, auf den seitens der Mobilstation ein Datenzugriff besteht, beispielsweise mittels einer Funkstrecke entsprechend der Datenabfrage bei einem Transponder.

Die Erfindung wird im folgenden anhand von Ausführungsbeispielen näher erläutert, welche auf Fahrzeuge, die sich auf Verkehrswegen (Schienen oder Straßen) bewegen, anwendbar sind.

In und/oder an den Verkehrswegen sind oder werden die erwähnten Referenzmarken an bekannten (geodätischen) Positionen angebracht. Jedes Fahrzeug enthält vorzugsweise mindestens ein automatisches Lesegerät (Sensor) zum Erkennen (Detektieren) der Referenzmarken. Jedes Fahrzeug enthält außerdem eine Satelliten-Navigationsanordnung zum Empfang von (Navigations-)Satelliten-Signalen und deren Auswertung. Außerdem ist es vorteilhaft für eine weitere Erhöhung der (Navigations-)Genauigkeit, wenn das Fahrzeug einen Geschwindigkeitsmesser (Tachometer) und eine Streckenkarte besitzt.

Fährt nun das Fahrzeug zu einem Referenzzeitpunkt $t_0$ an einer Referenzmarke mit bekannter geodätischer (geographischer) Position vorbei, so ist zu diesem Referenzzeitpunkt $t_0$ die geodätische (geographische) Position eines vorgebbaren Fahrzeugortes, beziehungsweise der Satelliten-Empfangs-Antenne (GPS-Antenne), bekannt (aus der Anordnung der Antenne an dem Fahrzeug sowie aus der Anordnung der Referenzmarke bezüglich des Fahrweges). Der Zeitpunkt der Vorbeifahrt an der Referenzmarke (Referenzzeitpunkt $t_0$) wird mittels des erwähnten Lesegerätes ermittelt. Dabei wird beispielsweise der Zeitpunkt genommen, an welchem die Referenzmarke erkannt wird. Für diese bekannte Position der GPS-Antenne (zum Referenzzeitpunkt $t_0$) werden nun aus an sich bekannten Messungen die sogenannten Pseudo-Entfernungen zu mindestens drei empfangbaren und/oder vorgebbaren GPS-Satelliten ermittelt. Für diese zum Referenzzeitpunkt $t_0$ bekannten Pseudo-Entfernungen $PR_i(t_0)$ werden nun (Entfernungs-)Korrekturwerte $\Delta R_i(t_0)$ ermittelt gemäß der Formel

$$\Delta R_i(t_0) = R_i(t_0) - PR_i(t_0) + c\Delta t(t_0) \tag{1}$$

mit

$t_0 =$      Referenzzeitpunkt,

$\Delta R_i(t_0)$      = Entfernungskorrektur der Satellitenmessung i zum Referenzzeitpunkt $t_0$,

$R_i(t_0) =$      geometrische Entfernung zwischen dem Satelliten i und der GPS-Antenne zum Referenzzeitpunkt $t_0$,

$PR_i(t_0) =$      gemessene Entfernung (Pseudorange) zwischen dem Satelliten i und der GPS-Antenne zum Referenzzeitpunkt $t_0$ und

$c\Delta t(t_0) =$      Uhrenfehler des GPS-Empfängers in der Mobilstation zum Referenzzeitpunkt $t_0$.

Die zum Referenzzeitpunkt $t_0$ gemäß Formel (1) ermittelten Entfernungskorrekturen $\Delta R_i(t_0)$ werden nun für

ein dem Referenzzeitpunkt $t_0$ folgendes vorgebbares Zeitintervall $t - t_0$ verwendet gemäß der Formel

$$PR_{Corr\_i}(t) = PR_i(t) + \Delta R_i(t_0) \tag{2}$$

mit

$PR_{Corr\_i}(t) =$     korrigierte Entfernung (Pseudorange) zwischen dem Satelliten i und der GPS-Antenne der Mobilstation zum Zeitpunkt t,

$PR_i(t) =$     gemessene Entfernung (Pseudorange) zwischen dem Satelliten i und der GPS-Antenne zum Zeitpunkt t.

Mit den korrigierten Entfernungen $PR_{Corr\_i}(t)$ entsprechend For-mel (2) ist bei der Positionsbesimmung für eine kleine Zeitspanne $t - t_0$ eine Genauigkeit erreichbar, welche derjenigen bei der differentiellen Satelliten-Navigation (mit ortsfester DDNSS-Referenzstation) entspricht. Es ist ersichtlich, daß diese Genauigkeit sich verringert, wenn sich die Zeitdifferenz $t - t_0$ vergrößert. Da sich die Meßfehler beziehungsweise die Soll-Korrekturwerte mit der Zeit ändern, bedeutet eine große Zeitdifferenz $t - t_0$ eine Verrin-gerung der Fehlerkorrelation, so daß die für diese ermittelten Korrekturwerte mit zunehmendem Zeit-Abstand von der Referenzmarke immer unzutreffender werden können. Unmittelbar bevor das Fahrzeug die nächste Referenzmarke erreicht, kann daher die (Positionierungs-)Genauigkeit am geringsten sein.

Dieser Nachteil wird bei einer Weiterbildung der Erfindung dadurch beseitigt, daß die Geschwindigkeit des Fahrzeuges, bezüglich des Erdbodens, berücksichtigt wird. Die Geschwindigkeit ist ermittelbar mittels eines Geschwindigkeitsmessers (Tachometer) und einer Streckenkarte, welche im allgemeinen in dem Fahrzeug vorhanden oder nachrüstbar sind. Die damit ermittelte (Fahrzeug-)Geschwindigkeit bewirkt in an sich bekannter Weise bei der Messung der Satelliten-Signale einen sogenannten Doppler-Beitrag, der bei der Satelliten-Navigation berücksichtigt wird.

Aus der durch den Geschwindigkeitsmesser und der Streckenkarte ermittelten Fahrzeuggeschwindigkeit, den durch Ephimeridendaten berechneten Satellitengeschwindigkeiten sowie der Satelliten-Empfänger-Geometrie (bei der Mobilstation) ergeben sich die Solldopplerbeiträge. Ein Korrekturwert der Entfernungsrate errechnet sich gemäß der Formel

$$\Delta \dot{R}_i(\tau) = DP_i(\tau) + DP_F(\tau) - \dot{R}_i(\tau) + c\dot{\Delta}t(\tau) \tag{3}$$

mit

$\Delta \dot{R}_i(\tau) =$     Korrektur der Entfernungsrate der Satellitenmessung i zum Zeitpunkt $\tau$,

$DP_i(\tau) =$     von der bekannten Satellitenbewegung abhängiger Doppler-Beitrag des i-ten Satelliten zum Zeitpunkt $\tau$,

$DP_F(\tau) =$     in Abhängigkeit von der gemessenen (Fahrzeug-)Geschwindigkeit ermittelter Doppler-Beitrag zum Zeit-punkt $\tau$,

$\dot{R}_i(\tau) =$     gemessene Entfernungsrate zwischen dem Satelliten i und der (Satelliten-Empfangs-)Antenne zum Zeit-punkt $\tau$, und

$c\dot{\Delta}t(\tau) =$     Uhrendrift (Uhrenfehler) des (Satelliten-)Empfängers zum Zeitpunkt $\tau$.

Dabei kann der Zeitpunkt $\tau$ ein nahezu beliebiger Zeitpunkt nach dem Referenzzeitpunkt $t_0$ sein. Anhand dieser Korrekturwerte entsprechend Formel (3) für die (Satelliten-)Entfernungsrate wird die zum Zeitpunkt t durchgeführte (Satelliten-)Entfernungsmessung korrigiert entsprechend der Formel

$$PR_{Corr\_i}(t) = PR_i(t) + \Delta R_i(t_0) + \int_{t_0}^{t} \Delta \dot{R}(\tau)d\tau \; . \qquad (4)$$

Mit dem Verfahren entsprechend Formel (4) wird vorteilhafterweise bei der Positionsbestimmung des Fahrzeuges eine hohe Genauigkeit erreicht, die für einen langen Zeitraum gilt. Dieser ist abhängig von dem Absolutwert der erforderlichen Genauigkeit.

Es ist vorteilhaft, die Korrekturen entsprechend Formeln (1), (2) oder (3), (4) an jeder Referenzmarke neu zu ermitteln. Damit ergibt sich weiterhin die Möglichkeit, die Referenzmarken in Abhängigkeit von der Topographie des Fahrweges anzuordnen. Denn bei einem ebenen geraden Fahrweg ist beispielsweise eine höhere Durchschnittsgeschwindigkeit vorhanden als bei einem kurvenreichen Fahrweg in einem hügeligen (bergigen) Gelände.

Für das beschriebene Verfahren ist lediglich erforderlich, daß seitens der Mobilstation eine Satelliten-Navigation möglich ist. Das heißt, es müssen die Sendesignale der Navigations-Satelliten empfangbar sein.

Die Erfindung ist nicht auf die beschriebenen Beispiele beschränkt, sondern sinngemäß auf weitere anwendbar. Beispielsweise ist auch eine Navigation mittels der GLONASS - Satelliten allein möglich oder eine Navigation gemäß GPSund/oder GLONASS - Satelliten.

**Patentansprüche**

1.  Satelliten-Navigationsverfahren für eine Mobilstation, wobei

    -   in der Mobilstation deren geographische Position ermittelt wird mittels einer Empfangs- und Auswerteeinheit zum Empfang und zur Auswertung von Satelliten-Navigationssignalen,

    -   daß entlang eines möglichen Weges der Mobilstation mindestens eine Referenzmarke, deren geographische Position bekannt ist, angebracht wird,

    -   daß in der Mobilstation ein Lesegerät zum Erfassen der Referenzmarken angebracht wird,

    **dadurch gekennzeichnet,**

    -   **daß** während des Erfassens einer Referenzmarke deren bekannte Position der Auswerteeinheit zugeleitet wird und daß aus dieser bekannten Position eine bekannte Referenzposition (Satelliten-Empfangs-Antenne) für die Mobilstation festgelegt wird,

    -   **daß** während des Erfassens der Referenzmarke gleichzeitig für die Referenzposition die zugehörigen tatsächlichen geometrischen Entfernungen zu vorgebbaren, empfangbaren Navigations-Satelliten ermittelt werden,

    -   **daß** während des Erfassens der Referenzmarke gleichzeitig durch eine Satelliten-Navigation die Pseudo-Entfernungen der Referenzposition zu den vorgebbaren, empfangbaren Navigations-Satelliten ermittelt werden,

    -   **daß** für die Mobilstation bei der Referenzmarke die Pseudo-Entfernungen mit den zugehörigen tatsächlichen Entfernungen verglichen werden und daß aus dem Vergleich ein (Entfernungs-)Korrekturwert ermittelt wird,

    -   **daß** zwischen zwei Referenzmarken lediglich durch Satelliten-Navigation für die Mobilstation die Pseudo-Entfernungen ermittelt werden und diese durch den Korrekturwert korrigiert werden und

    -   **daß** aus den korrigierten Pseudo-Entfernungen bedarfsweise eine Position der Mobilstation ermittelt wird.

2.  Satelliten-Navigationsverfahren nach Anspruch 1, **dadurch gekennzeichnet,**

    -   **daß** von dem Lesegerät der Mobilstation eine Referenzmarke zu einem Referenzzeitpunkt $t_0$ erfaßt wird,

- **daß** an der Referenzmarke ein (Entfernungs-)Korrekturwert ermittelt wird entsprechend der Formel

$$\Delta R_i(t_0) = R_i(t_0) - PR_i(t_0) + c\Delta t(t_0)$$

mit

$t_0 =$ Referenzzeitpunkt,

$\Delta R_i(t_0) =$ Entfernungskorrektur der Satellitenmessung i zum Referenzzeitpunkt $t_0$,

$R_i(t_0) =$ geometrische Entfernung zwischen einem empfangbaren Satelliten i und der Satelliten-Empfangs-Antenne der Mobilstation zum Referenzzeitpunkt $t_0$,

$PR_i(t_0) =$ gemessene Entfernung (Pseudorange) zwischen dem Satelliten i und der Empfangs-Antenne zum Referenzzeitpunkt $t_0$ und

$c\Delta t(t_0) =$ Uhrenfehler des Satelliten-Empfängers in der Mobilstation zum Referenzzeitpunkt $t_0$ und

- **daß** die zu einem vorgebbaren Zeitpunkt $t$ in der Mobilstation ermittelten Pseudo-Entfernungen korrigiert werden entsprechend der Formel

$$PR_{Corr\_i}(t) = PR_i(t) + \Delta R_i(t_0)$$

mit

$PR_{Corr\_i}(t) =$ korrigierte Entfernung (Pseudorange) zwischen dem Satelliten i und der Antenne der Mobilstation zum Zeitpunkt t,

$PR_i(t) =$ gemessene Entfernung (Pseudorange) zwischen dem Satelliten i und der Antenne zum Zeitpunkt t.

3. Satelliten-Navigationsverfahren nach Anspruch 1 oder Anspruch 2, **dadurch gekennzeichnet,**

- **daß** in der Mobilstation zusätzlich deren Geschwindigkeit bezüglich des Erdbodens mit einem von der Satelliten-Navigation unabhängigen Sensor ermittelt wird,

- **daß** an der Referenzmarke zu dem Zeitpunkt $\tau$ ein Korrekturwert der Entfernungsrate ermittelt wird entsprechend der Formel

$$\Delta \dot{R}_i(\tau) = DP_i(\tau) + DP_F(\tau) - \dot{R}_i(\tau) + c\dot{\Delta}t(\tau)$$

mit

$\Delta \dot{R}_i(\tau) =$ Korrektur der Entfernungsrate der Satellitenmessung i zum Zeitpunkt $\tau$,

$DP_i(\tau) =$ von der bekannten Satellitenbewegung abhängiger Doppler-Beitrag des i-ten Satelliten zum Zeitpunkt $\tau$,

$DP_F(\tau) =$ in Abhängigkeit von der gemessenen (Fahrzeug)Geschwindigkeit ermittelter Doppler-Beitrag zum Zeitpunkt $\tau$,

$\dot{R}_i(\tau) =$ gemessene Entfernungsrate zwischen dem Satelliten i und der (Satelliten-Empfangs-)Antenne zum Referenz-Zeitpunkt $\tau$ und

$c\dot{\Delta}t(\tau) =$ Uhrendrift (Uhrenfehler) des (Satelliten-)Empfängers zum Zeitpunkt $\tau$ und

- **daß** die zu einem vorgebbaren Zeitpunkt *t* in der Mobilstation ermittelten Pseudo-Entfernungen korrigiert werden entsprechend der Formel

$$PR_{Corr\_i}(t) = PR_i(t) + \Delta R_i(t_0) + \int_{t_0}^{t} \Delta \dot{R}(\tau)d\tau \quad .$$

**4.** Satelliten-Navigationsverfahren nach einem der vorhergehenden Ansprüche, **dadurch gekennzeichnet,**

- **daß** die Mobilstation an einem an Verkehrswege gebundenen Fahrzeug angebracht wird und

- **daß** die Referenzmarken entlang des Verkehrsweges angebracht werden.

**5.** Satelliten-Navigationsverfahren nach einem der vorhergehenden Ansprüche, **dadurch gekennzeichnet, daß** als Verkehrsweg ein Schienenweg gewählt wird.

**6.** Satelliten-Navigationsverfahren nach einem der vorhergehenden Ansprüche, **dadurch gekennzeichnet, daß** die Referenzmarken sowie das Lesegerät derart ausgebildet werden, daß ein zusätzlicher Daten- und/oder Signalaustausch zwischen dem Fahrzeug und einer dieses beeinflussenden Station ermöglicht wird.

**7.** Satelliten-Navigationsverfahren nach einem der vorhergehenden Ansprüche, **dadurch gekennzeichnet, daß** die Referenzmarken von dem Lesegerät mittels elektromagnetischer Wellen erfaßt weden.

**8.** Satelliten-Navigationsverfahren nach einem der vorhergehenden Ansprüche, **dadurch gekennzeichnet, daß** die Referenzmarken entlang eines Vekehrsweges in Abhängigkeit von dessen Topograhie angeordnet werden.

**9.** Satelliten-Navigationsverfahren nach einem der vorhergehenden Ansprüche, **dadurch gekennzeichnet, daß** die Mobilstation einen Datenspeicher besitzt, in dem zumindest die geographischen Positionen (Koordinaten) von allen Referenzmarken, die für eine Positionsbestimmung der Mobilstation entlang ihres Fahrweges mit vorgebbarer Genauigkeit benötigt werden, gespeichert werden.

**Claims**

**1.** A satellite navigation method for a mobile station, wherein the geographic position of the mobile station is determined using a receiving and evaluating unit for the reception and evaluation of satellite navigation signals disposed in the mobile station,
  installing at least one reference mark whose geographic position is known along a possible route of the mobile station;
  detecting the reference marks with a reading device installed in the mobile station; **characterized in that** upon detection of a reference mark
  supplying the known position of the reference mark to the evaluating unit and, from this known position, determining a known reference position (satellite receiving antenna) for the mobile station, upon detection of a reference mark, simultaneously determining the associated actual geometric ranges from predetermined, receivable navigation satellites for the reference position;
  upon detection of the reference mark, simultaneously determining pseudoranges of the reference position from the predetermined, receivable navigation satellites by satellite navigation,
  comparing the pseudoranges with the associated actual ranges for the mobile station at the reference mark, and determining a (range) correction value from the comparison;
  at positions between two reference marks, determining further pseudoranges for momentary positions for the mobile station only by satellite navigation, and correcting these further pseudoranges with the correction values; and,
  determining a momentary position of the mobile station from the corrected further pseudoranges, as needed.

**2.** A satellite navigation method according to claim 1, wherein:

the reference mark is detected by the reading device of the mobile station at a reference moment $t_0$;

the (range) correction value is determined at the reference mark according to the equation

$$\Delta R_i(t_0) = R_i(t_0) - PR_i(t_0) + c\Delta t(t_0)$$

where

$t_0 =$ reference moment,

$\Delta R_i(t_0) =$ range correction of the satellite measurement i at the reference moment $t_0$,

$R_i(t_0) =$ geometric range between a receivable satellite i and the satellite receiving antenna of the mobile station at the reference moment $t_0$,

$PR_i(t_0) =$ measured range (pseudorange) between the satellite i and the receiving antenna at the reference moment $t_0$, and

$c\Delta t(t_0) =$ clock error of the satellite receiver in the mobile station at the reference moment $t_0$; and,

the pseudoranges determined in the mobile station at a predetermined moment t are corrected according to the equation

$$PR_{Corr\_i}(t) = PR_i(t) + \Delta R_i(t_0)$$

where

$PR_{Corr\_i}(t) =$ corrected range (pseudorange) between the satellite i and the antenna of the mobile station at the moment t, and

$PR_i(t) =$ measured range (pseudorange) between the satellite i and the antenna at the moment t.

3. A satellite navigation method according to claim 1 or 2 further comprising:

additionally determining, within the mobile station, the velocity of the mobile station relative to the earth's surface using a sensor on the mobile station which is independent of the satellite navigation;

determining a correction value of the range rate at the reference mark at a moment $\tau$ according to the equation

$$\Delta \dot{R}_i(\tau) = DP_i(\tau) + DP_F(\tau) - \dot{R}_i(\tau) + c\dot{\Delta}t(\tau)$$

where

$\Delta \dot{R}_i(\tau) =$ correction of the range rate of the satellite measurement i at the moment $\tau$,

$DP_i(\tau) =$ Doppler contribution of the i-th satellite as a function of the known satellite movement at the moment $\tau$,

$DP_F(\tau) =$ Doppler contribution determined as a function of the measured (vehicle) velocity at the moment $\tau$,

$\dot{R}_i(\tau) =$ measured range rate between the satellite i and the (satellite receiving) antenna at the reference moment $\tau$, and

$c\dot{\Delta}t(\tau) =$ clock drift (clock error) of the (satellite) receiver at the moment $\tau$; and,

correcting the pseudoranges determined in the mobile station at a predetermined time t according to the equation

$$PR_{Corr\_i}(t) = PR_i(t) + \Delta R_i(t_0) + \int_{t_0}^{t} \Delta \dot{R}(\tau)\, d\tau.$$

4. A satellite navigation method according to one of the preceding claims, wherein the mobile station is installed on a traffic route-guided vehicle, and the reference marks are installed along the traffic route.

**5.** A satellite navigation method according to one of the preceding claims, wherein the traffic route is a railroad track.

**6.** A satellite navigation method according to one of the preceding claims, further including configuring the reference marks as well as the reading device such that an additional data exchange and/or signal exchange is permitted between the vehicle and one of influencing stations.

**7.** A satellite navigation method according to one of the preceding claims, wherein the reference marks are detected by the reading device by use of electromagnetic waves.

**8.** A satellite navigation method according to one of the preceding claims, wherein the reference marks are arranged along a traffic route as a function of the route's topography.

**9.** A satellite navigation method according to claim 1, further comprising providing the mobile station with a data store in which at least the geographic positions (coordinates) of all reference marks which are required for determining the position of the mobile station along its travel route with a predetermined precision are stored.

**Revendications**

**1.** Procédé de navigation satellite pour station mobile, où

- dans la station mobile, dont la position géographique est calculée au moyen d'une unité de réception et d'exploitation pour la réception et l'exploitation des signaux de navigation satellite,

- le long d'une trajectoire possible de la station mobile au moins une marque de référence, dont la position géographique est connue, est placée,

- dans la station mobile, un appareil de lecture pour l'enregistrement des marques de référence est installé,

    **caractérisé en ce que**

- pendant l'enregistrement d'une marque de référence, dont la position connue est transmise à l'unité d'exploitation et que, à partir de cette position connue, une position de référence connue (antenne de réception satellite) est fixée pour la station mobile,

- pendant l'enregistrement de la marque de référence, les distances géométriques réelles correspondantes par rapport aux satellites de navigation pré-définissables et captables sont calculées simultanément pour la position de référence,

- pendant l'enregistrement de la marque de référence les pseudo-distances de la position de référence par rapport aux satellites de navigation pré-définissables et captables sont calculées simultanément par une navigation satellite,

- pour la station mobile, à la marque de référence, les pseudo-distances sont comparées aux distances réelles correspondantes et, qu'à partir de cette comparaison, une valeur corrective (de distance) est calculée,

- entre deux marques de référence, les pseudo-distances sont calculées simplement par navigation satellite pour la station mobile et que celles-ci sont rectifiées par la valeur corrective et

- qu'à partir des pseudo-distances corrigées, si besoin est, une position de la station mobile est calculée.

**2.** Procédé de navigation satellite selon la revendication 1, **caractérisé en ce que**

- une marque de référence à un moment de référence $t_o$ est enregistrée par l'appareil de lecture de la station mobile

- qu'à la marque de référence une valeur corrective (de distance) est calculée selon la formule

$$\Delta R_i(t_o) = R_i(t_o) - PR_i(t_o) + c\Delta_t(t_o)$$

avec

$t_o$ =     moment de référence,

$\Delta R_i(t_o)$ =     correction de distance de la mesure du satellite i par rapport au moment de référence $t_o$.

$R_i(t_o)$ =     distance géométrique entre un satellite i captable et l'antenne de réception satellite de la station mobile au moment de référence $t_o$.

$PR_i(t_o)$ =     distance mesurée (pseudo-distance) entre le satellite i et l'antenne de réception au moment de référence $t_o$ et

$c\Delta t(t_o)$ =     erreur horaire du récepteur satellite dans la station mobile au moment de référence $t_o$ et

- que les pseudo-distances calculées à un moment t pré-définissable dans la station mobile sont corrigées selon la formule

$$PR_{corr\_i}(t) = PR_i(t) + \Delta R_i(t_o)$$

avec

$PR_{corr\_i}(t)$ =     distance corrigée (pseudo-distance) entre le satellite i et l'antenne de la station mobile au moment t,

$PR_i(t)$ =     distance mesurée (pseudoamplitude) entre le satellite i et l'antenne au moment t.

3. Procédé de navigation satellite selon la revendication 1 ou la revendication 2, **caractérisé en ce que**

- e plus, dans la station mobile, la vitesse de celle-ci par rapport au sol terrestre est calculée avec un capteur indépendant de la navigation satellite,

- à la marque de référence au point $\tau$, une valeur corrective de la distanciation est calculée selon la formule

$$\Delta \dot{R}_i(\tau) = DP_i(\tau) + DP_F(\tau) - \dot{R}_i(\tau) + c\dot{\Delta}t(\tau)$$

avec

$\Delta \dot{R}_i(\tau)$ =     correction de la distanciation de la mesure du satellite i au moment $\tau$,

$DP_i(\tau)$ =     contribution Doppler du satellite i au moment $\tau$ dépendant du mouvement connu du satellite,

$DP_F(\tau)$ =     contribution Doppler calculée au moment $\tau$ en fonction de la vitesse mesurée (du véhicule),

$\dot{R}_i(\tau)$ =     distanciation mesurée entre le satellite i et l'antenne (de réception satellite) au moment de référence $\tau$ et

$c\dot{\Delta}t(\tau)$ =     variation horaire (erreur horaire) du récepteur (satellite) au moment $\tau$ et

- qu'à un moment pré-définissable t, les pseudo-distances calculées dans la station mobile sont corrigées selon la formule

$$PR_{corr\_i}(t) = PR_i(t) + \Delta R_i(t_o) + \int_{t_o}^{t} \Delta R(\tau)\,d\tau$$

**4.** Procédé de navigation satellite selon une des revendications précédentes, **caractérisé en ce que**

- la station mobile est installée sur un véhicule en liaison avec des voies de circulation, et

- que les marques de référence sont disposées le long de la voie de circulation,

**5.** Procédé de navigation satellite selon une des revendications précédentes, **caractérisé en ce qu'**une voie ferroviaire est choisie comme voie de circulation.

**6.** Procédé de navigation satellite selon une des revendications précédentes, **caractérisé en ce que** les marques de référence ainsi que l'appareil de lecture sont conçus de manière à permettre un échange supplémentaire de données et/ou de signaux entre le véhicule et une des stations influant sur celui-ci.

**7.** Procédé de navigation satellite selon une des revendications précédentes, **caractérisé en ce que** les marques de référence sont enregistrées par l'appareil de lecture au moyen d'ondes électromagnétiques.

**8.** Procédé de navigation satellite selon une des revendications précédentes, **caractérisé en ce que** les marques de référence sont disposées le long d'une voie de circulation en fonction de sa topographie.

**9.** Procédé de navigation satellite selon une des revendications précédentes, **caractérisé en ce que** la station mobile possède une mémoire,dans laquelle au moins les positions géographiques (coordonnées) de toutes les marques de référence qui sont nécessaires pour une définition de la position de la station mobile le long de sa voie de circulation avec une précision pré-définissable sont stockées.